# EUROPEAN PATENT APPLICATION

(11) **EP 4 790 622 A1**
(43) Date of publication of application: **12.08.2026**
(21) Application number: 25156720.2
(22) Date of filing: 09.02.2025
(51) Int. Cl.: G06Q 20/08, G06Q 20/38, G06Q 20/40, G06Q 20/42, G06V 20/62, G07F 15/00, G07F 17/00, G06Q 20/32

(54) **AUTHORIZING A TRANSACTION**

(71) Applicant: ryd GmbH, 80339 München (DE)
(72) Inventor: Martens, Johannes, 80339 München (DE); Greil, Michael, 80339 München (DE)
(74) Representative: Keller Schneider Patentanwaltsgesellschaft mbH

(57) **Abstract**

A computer-implemented method for authorizing a transaction comprises receiving, at a background system (30), physically discernible information (50) about a vehicle (16) associated with an authorizing party (18). Vehicle identification data (52) is obtained, based on the received physically discernible information (50). One or more data assets (40) are accessed in one or more databases (36). The one or more data assets (40) define a plurality of associations (42). Each association (42) of the plurality of associations (42) associates identifying information (44) about a respective vehicle (16) with contact information (46). A particular association (42V) of the plurality of associations (42) is determined. A request (54) to authorize a transaction is sent, or caused to be sent, to a recipient identified by the contact information (46) of the particular association (42V). The invention further comprises one or more machine-readable media and a system.

## Description

### FIELD OF THE INVENTION

The present invention relates to the field of authorizing a transaction in a situation where the transaction involves at least an authorizing party having a vehicle.

### BACKGROUND OF THE INVENTION

Commercial transactions of numerous kinds are well-known. As a non-limiting example, a transaction may involve the sale of goods or services in exchange for financial remuneration. The transaction needs to be authorized by at least one and usually all parties involved. In today's fast moving world, it is important to effect this authorization as fast and seamlessly as possible.

The required degree of trustworthiness of the authorization depends on the particulars of the transaction, in particular on the monetary value involved. For simple low-value transactions, such as buying a few groceries or fast food at a drive-through, a certain error rate is acceptable if the authorization process is particularly fast and seamless. This is because any time savings immediately translate to increased throughput, reduced costs, and higher customer satisfaction, which may more than compensate for any monetary loss caused by a relatively small number of fraudulent transactions.

Many transactions involve at least one party having a vehicle. These include, but are not limited to, transactions at a drive-through restaurant, a drive-through bank, a filling station, an EV charging station, a car wash, a shop having a drive-through lane, a parking lot, any entity close to a parking lot, or even an entity a moving vehicle passes by.

US 2021/0406893 A1 discloses techniques which use multi-factor authentication for authorizing a transaction. Upon receiving a request to complete a transaction, captured vehicle identification information and received user identification information is compared to stored authentication information to authenticate a driver/vehicle pair. The vehicle identification information may include one or more of the vehicle identification number (VIN), vehicle type, vehicle color, and vehicle license plate. The user identification information may include one or more of a biometric marker, a password, a PIN, and an ID received from a mobile device of an user.

However, according to the technique known from US 2021/0406893 A1, a vehicle system initiates the authorization process and sends a request to complete the transaction to a merchant system. This is not just an administrative choice, but it is a technical requirement because the merchant system would not know how to contact the vehicle system in the absence of the initial request sent by the vehicle system. The flow of operations according to US 2021/0406893 A1 may be suitable for some kinds of transactions, but not for others. In particular, the need that the vehicle system initiates the authorization process requires a fairly complex vehicle system which is specially configured for the process, such as a smartphone with an installed app. This may not always be available or may not be desired. The need to install a particular smartphone app may deter potential customers, and it may not be permissible to use a smartphone while the vehicle is in motion. A need exists for a technique which can be initiated by a party such as the merchant, i.e., a party other than the party authorizing the transaction.

### OBJECTS AND SUMMARY OF THE INVENTION

It is an object of the present invention to provide a convenient way of authorizing a transaction in a situation where the transaction involves at least an authorizing party having a vehicle.

The present invention is defined by the independent claims. The dependent claims concern optional features of some embodiments of the invention. For the purpose of determining the extent of protection, due account shall be taken of any element which is equivalent to an element specified in the claims.

The present invention is based on the idea of using physically discernible information about the vehicle for determining contact information. The contact information is then used to identify the recipient of a request to authorize the transaction. This enables an initiating party, which may be a merchant or more generally any party other than the party which needs to authorize the transaction, to initiate the authorization operation.

The present invention thus facilitates transactions controlled by the initiating party, such as the merchant. This is an important benefit, as even small savings for an individual transaction translate into large overall benefits.

The order in which the operations and method steps are recited in the claims should not be construed as limiting, unless it is specified otherwise in the claims. It is apparent that many of these operations and method steps can be performed in a different order or wholly or partially parallel or wholly or partially interleaved with each other.

The machine-readable medium according to the present disclosure may comprise suitable program instructions to realize the recited operations, for example on a general-purpose computer, or on a device comprising a processor, or in a programmable integrated circuit, or on a network of multiple computers, devices with processors, or programmable integrated circuits. The machine-readable medium may be any kind of transitory or non-transitory data carrier like, for example, a hard disk, or an optical data carrier, or a semiconductor memory, or a signal transmitted via a carrier wave over a computer network. In some embodiments, the machine-readable medium is a tangible and/or non-transitory data carrier, which excludes carrier waves.

### BRIEF DESCRIPTION OF THE DRAWINGS

Further features, objects and advantages of the invention will become apparent from the following detailed description, in connection with the annexed schematic drawings, in which:
Fig. 1 shows a schematic representation of a merchant site in communication with a background system, according to embodiments of the present invention.
Fig. 2 shows an alternative configuration of the background system with multiple servers, according to some embodiments of the invention.
Fig. 3 shows a schematic flow diagram of operations according to embodiments of the present invention.

### DETAILED DESCRIPTION OF EMBODIMENTS OF THE INVENTION

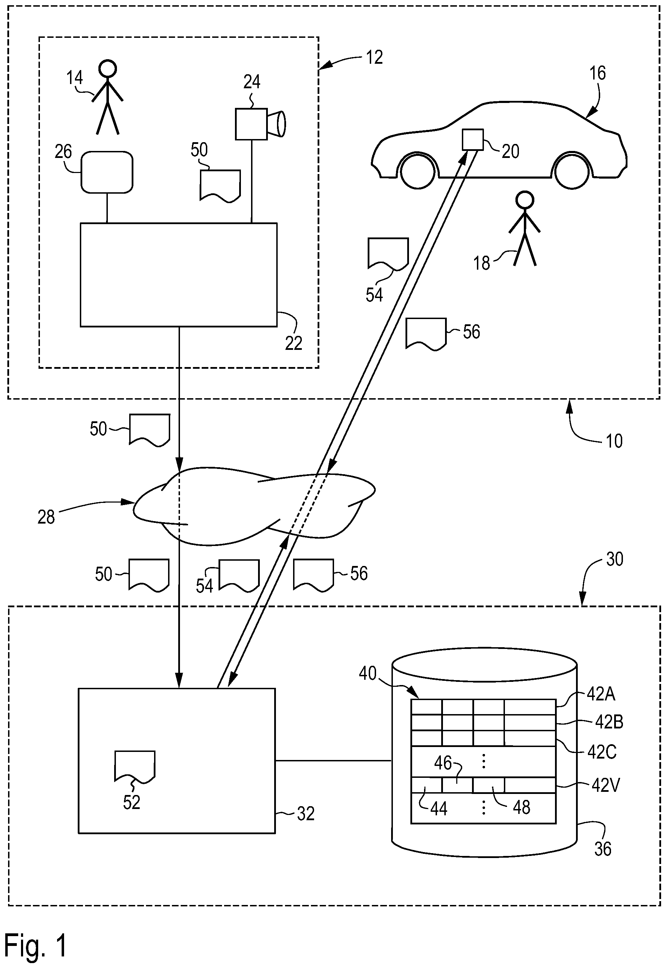

Fig. 1 shows a merchant site 10 with a business establishment 12. The business establishment 12 may be any of a wide variety of businesses which serve customers that arrive in or are otherwise associated with vehicles. For example and without limitation, the business establishment 12 may be a drive-through restaurant or a filling station or a shop located on or adjacent to a parking lot. The business establishment 12 is operated or owned by a merchant. An initiating party 14, which may be the merchant operating the business establishment 12 or an assistant of the merchant or a team of assistants or another suitable entity, initiates the presently described authorization process. A vehicle 16 of an authorizing party 18 is located in physical proximity to the business establishment 12. The vehicle 16 may be, for example, a car or a truck or any other kind of vehicle associated with the authorizing party 18. A transaction, such as the sale of goods or services, is to be concluded between the initiating party 14 and the authorizing party 18.

The authorizing party 18, such as a customer of the business establishment 12, is shown in Fig. 1 next to the vehicle 16. However, the authorizing party 18 may just as well be located in the vehicle 16 as a driver or passenger. The vehicle 16 may be stationary or in motion.

The authorizing party 18 has access to a customer terminal 20, which may be in the form of an entertainment system or a dashboard system or a navigation system built into the vehicle 16, or in the form of a separate device, such as a smartphone of the authorizing party 18. Similarly, the business establishment 12 has a merchant terminal 22, which may be a commonly known computer with suitable software such as a dedicated application program or even just a usual internet browser, or a cash register, or a smartphone of the initiating party 14, or even a private smartphone of the initiating party 14 which executes a suitable app. The merchant terminal 22 comprises or communicates with input/output devices including a camera 24 and a data entry device 26 such as a keyboard or a mouse or a touchpad or a touchscreen. The merchant terminal 22 further communicates, via a network 28 such as the internet, with a background system 30. The initiating party 14, such as the merchant or an assistant of the merchant such as a sales person or a server, has access to the merchant terminal 22 and any peripheral components.

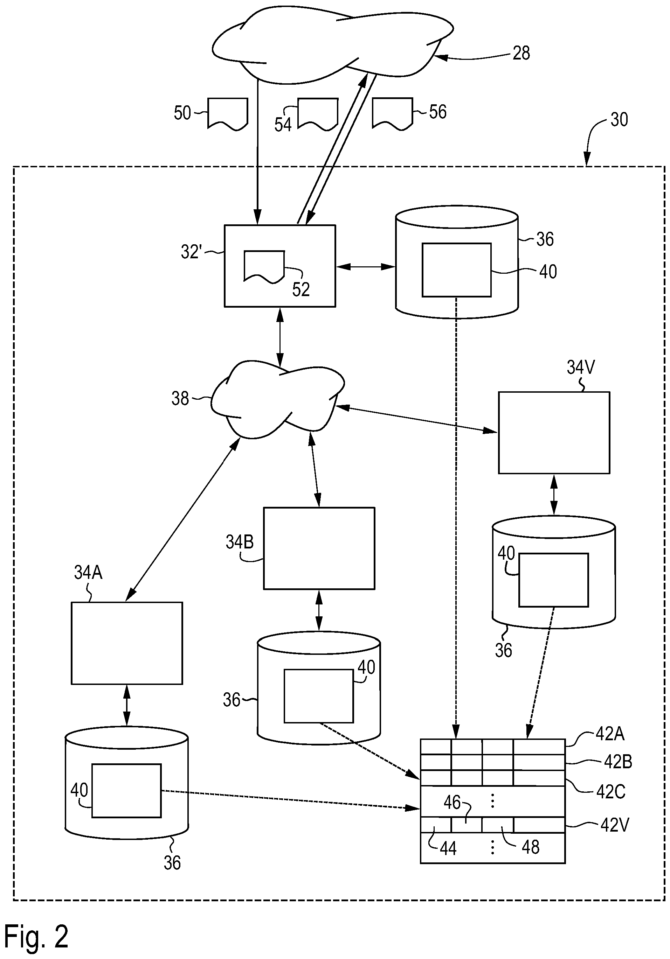

In various embodiments, the background system 30 can comprise a single server or several servers communicating with each other. In the case of multiple servers, these may be located at a single site or distributed over a number of physically separated sites, and the servers may be operated by a single entity or multiple entities. The present invention is therefore not limited regarding the configuration and number of servers in the background system 30. The embodiment shown in Fig. 1 comprises a single server 32 at the background system 30. Fig. 2 illustrates an alternative configuration of the background system 30 with multiple servers, namely a first server 32' operated by a company offering the presently described authorization service which may communicate, via a network 38 which may be the same as the network 28 or different therefrom, with multiple second servers 34A, 34B, ... operated by respective vehicle manufacturers. The second servers 34A, 34B, ..., are jointly designated as second servers 34 in the following, and the reference sign 34V designates a particular server which is a second server 34 operated by the manufacturer of the particular vehicle 16.

The server 32 shown in Fig. 1 communicates with a database 36 that stores data assets 40. The data assets 40 define a plurality of associations 42A, 42B, 42C, ..., which are jointly designated as associations 42 in the present document. For example, each of the associations 42 may correspond to a respective row in a database table. Similarly, in the embodiment shown in Fig. 2, each one of the first and second servers 32', 34A, 34B, ... communicates with a respective database 36 that stores respective data assets 40. The data assets 40 together define the associations 42. In this case, the associations 42 may represent a logical concept in that none of the databases 36 shown in Fig. 2 contains any of the associations 42 in its entirety.

In the presently described embodiments both according to Fig. 1 and according to Fig. 2, each association 42 relates to a number of information items regarding a respective vehicle. For the purpose of the present invention, important information items of each association 42 are (i) identifying information 44 about a respective vehicle and (ii) associated contact information 46. It is apparent that the associations 42 may comprise or refer to numerous further information items, as required or useful in certain embodiments. For example and without limitation, each or some of the associations 42 may further comprise banking information 48 including credit card information, which enables an authorizing party 18 to be debited after successful authorization of a transaction.

For example, assuming that a particular association 42V is associated with the particular vehicle 16, the particular association 42V may comprise, as the identifying information 44, data about the make, model, model year, color, ... of the vehicle 16, and/or data about the license plate number of the vehicle 16. Additional or alternative data may be present in some embodiments, such as data about a Bluetooth^{®} name associated with the vehicle 16. The present disclosure is intended to encompass all kinds of identifying information 44 which may help to match the particular association 42V among the plurality of associations 42 to physically discernible information 50 about the vehicle 16 - such as, without limitation, the physical appearance of the vehicle 16.

The particular association 42V further contains, as the contact information 46, information suitable for contacting the customer terminal 20 and/or the vehicle 16 and/or the authorizing party 18. In a particularly simple example, the contact information 46 may be a mobile phone number of the authorizing party 18 or any other address or identifier allowing the background system 30 to send a request to a smartphone or other mobile device of the authorizing party 18. Alternatively or additionally, the contact information 46 may be an identifier or address (such as an IP address) allowing the background system 30 to send a request to the vehicle 16, in particular to an entertainment system or a dashboard system or a navigation system of the vehicle 16.

In operation, the merchant terminal 22 receives the physically discernible information 50 and transmits it over the network 28 to the background system 30, namely the server 32 (Fig. 1) or the first server 32' (Fig. 2). The (first) server 32, 32' processes the physically discernible information 50 to generate vehicle identification data 52. One or more of the servers 32, 32', 34 further determine(s) a particular association 42V having identifying information 44 that matches the vehicle identification data 52. One of the servers 32, 32', 34 then sends an authorization request 54 to the customer terminal 20, asking the authorizing party 18 to authorize the transaction. After the authorizing party 18 has indicated its agreement with the transaction, the customer terminal 20 sends an authorization response 56 to a suitable entity, such as to the server 32, 32', 34 which sent the authorization request 54 and/or to a banking institution.

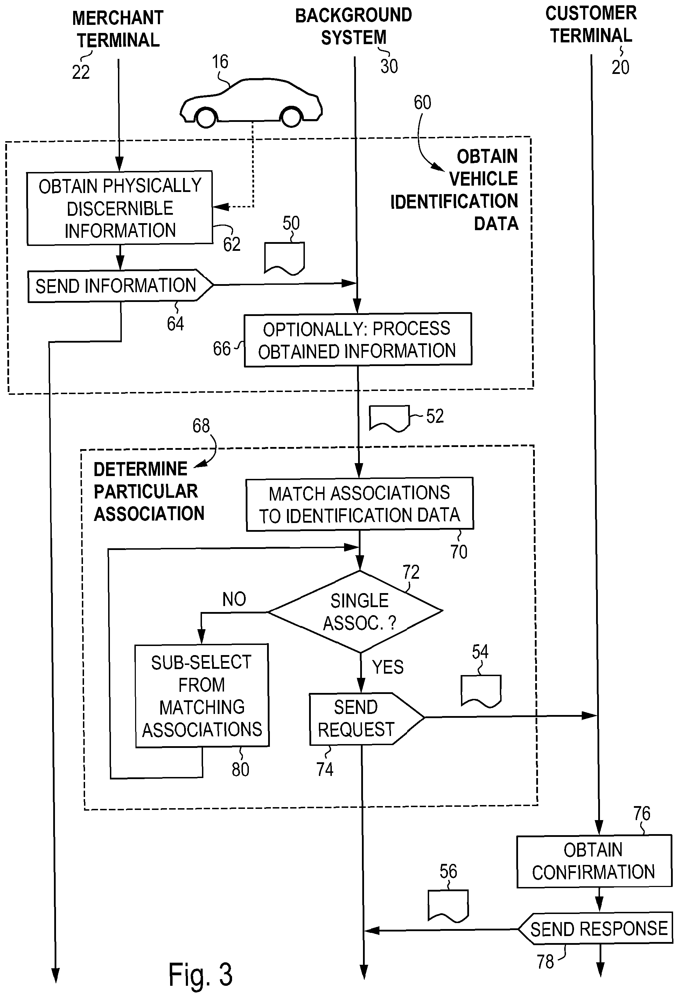

The operations summarized above will now be described in more detail, in an embodiment illustrated in Fig. 3. Before a customer (such as the authorizing party 18) can take part in the process, the customer needs to be registered. This involves creating or updating an association 42, which contains any required or desired identifying information 44 and contact information 46 pertaining to the vehicle 16 and/or the authorizing party 18. As mentioned above, the one or more servers 32, 32', 34 and the one of more databases 36 of the background system 30 may be operated by one or more entities, including an entity which offers the inventive authorization service and/or an entity associated with the manufacturer of the vehicle 16. One or more of the servers 32, 32', 34 may comprise multiple physical or virtual servers, which operate together to provide the presently described functions.

The exemplary flow of operations shown in Fig. 3 concerns the authorization of a transaction. For example, a customer sitting in the vehicle 16 may have bought a meal at a drive-through restaurant and now wishes to pay. The initiating party 14, such as a merchant or an assistant of the merchant such as a server, has entered the price of the meal at the merchant terminal 22 and now wishes to conclude the payment transaction by obtaining authorization from the authorizing party 18 regarding the payment.

In a first operation 60, the vehicle identification data 52 is obtained, based on the physically discernible information 50 about the vehicle 16. In the presently described embodiment, operation 60 is performed partly by the merchant terminal 22 and partly by the background system 30, but any distribution between these and further computing devices is possible.

Operation 60 starts with step 62, in which the merchant terminal 22 obtains the physically discernible information 50. In various embodiments, this can be done in a wide variety of ways. For example, the camera 24, which may be mounted at a fixed position (e.g., at an entrance of a car wash), can automatically take a picture of the vehicle 16, or of part of the vehicle 16. In other embodiments, the initiating party 14 uses a movable camera 24 or another image capture device, such as a smartphone of the assistant. As another example, the initiating party 14 may manually enter certain physically discernible information 50 at the merchant terminal 22, using the data entry device 26 or another suitable input means such as via voice recognition.

In many embodiments, the physical presence of the vehicle 16 at the merchant site 10 is required so that the vehicle 16 serves as some kind of security token. For example, the initiating party 14 may have received instructions not to enter any information at the merchant terminal 22 unless the vehicle 16 is physically present, or the merchant terminal 22 may enforce an automatic check (e.g., using the camera 24) of the presence of the vehicle 16. In other embodiments, physically discernible information 50 about the vehicle 16 may be entered even if the vehicle 16 is not present at the merchant site 10. For example, the authorizing party 18 may communicate a registration number of the vehicle 16 or one or more other kinds of physically discernible information 50 to the initiating party 14 or directly to the background system 30 by telephone or by another telecommunication means.

As yet another example, the merchant terminal 22 may obtain information about a Bluetooth name associated with the vehicle 16. A Bluetooth reader built into or connected with the merchant terminal 22 may be used for this purpose, or the initiating party 14 may use his or her smartphone to scan the Bluetooth name of the vehicle 16.

An important aspect of many embodiments of the present invention is that the physically discernible information 50 does not need to uniquely identify the vehicle 16 among the many vehicles registered in the one or more databases 36. For example, if the physically discernible information 50 is an image of only part of the vehicle 16, the image may, but does not need to, show the full license plate, or may not even show any part of the license plate. This may be because it may be cumbersome to obtain a picture of the vehicle 16 at an angle which shows the license plate. It is also possible that the license plate is shown in the image, but is partly or fully unreadable, for example due to poor lighting conditions or reflections or dirt. Many embodiments of the present invention are designed to cope with this kind of situation.

In some embodiments, due to privacy and data protection concerns, provisions are taken that effectively prevent the recordation of the full license plate, or even part of the license plate, in the physically discernible information 50. For example, the camera 24 may purposely be arranged at a location from which the license plate of the vehicle 16 cannot be seen, or the initiating party 14 (such as the merchant or an assistant of the merchant) may have received instructions not to photograph the license plate.

The physically discernible information 50 may also not be uniquely identifying in cases where it is entered manually by the initiating party 14. For example, it may not be practicable enter uniquely identifying information such as the full license plate number of the vehicle 16. Indeed, requiring a human being to manually enter a full license plate number may, in some embodiments, be seen as detrimental to the general object of the present invention to provide a streamlined way for authorizing a transaction with a minimum of time and hassle. In some embodiments, the merchant terminal 22 provides a user interface by which the human being can quickly enter information such as the make and color of the vehicle 16 using, for example, touch fields or dropdown lists. Alternatively or additionally, part of the license plate information, such as the first few characters or the last few characters, may be entered via the user interface.

The physically discernible information 50 is then, in step 64, sent to the background system 30, in particular the server 32 (Fig. 1) or the first server 32' (Fig. 2). In many embodiments, the communication sent to the (first) server 32, 32' comprises further useful or necessary information, such as an identifier of the initiating party 14, and/or security information such as a password, and/or a monetary amount which is to be authorized in the transaction. This information may be automatically supplied by the merchant terminal 22, or some or all of it may be entered manually by or on behalf of the initiating party 14.

The physically discernible information 50 received at the (first) server 32, 32' of the background system 30 as a result of step 64 may already be usable as the vehicle identification data 52 with little or no further processing. This may be the case if the physically discernible information 50 has been manually entered by the initiating party 14. For example, if the initiating party 14 selects the color and make of the vehicle 16 via a user interface of the merchant terminal 22 (e.g., indicating that the vehicle 16 is a red VW Golf), then this information can immediately be used as the vehicle identification data 52.

In other embodiments and use cases, a certain amount of processing of the physically discernible information 50 may be necessary to obtain the vehicle identification data 52. This is done in step 66. For example, if the physically discernible information 50 is an image showing all or part of a license plate of the vehicle 16, then an OCR (optical character recognition) process may be necessary to obtain the vehicle identification data 52, such as the actual characters shown on the license plate in a usual encoding such as UTF-8 or UTF-16 or ASCII. As another example, if the physically discernible information 50 is an image generally showing the vehicle 16, then image processing and recognition may need to be performed in step 66 to determine information about the make and/or the model and/or the model year and/or the color of the vehicle 16.

When image processing and recognition techniques are used in step 66, an important difference compared to many other techniques is that, in the present context, even partial information may be useful or sufficient. Such partial information may, for example, be information that determines certain groups or classes or categories for the entities shown in the image, or information that excludes certain possibilities. For example, even in cases where it is not possible or not desired to determine the exact make and model of the vehicle 16 from an available image, the processing in step 66 may determine the general body design of the vehicle 16 (e.g., sedan, truck, pickup, convertible, ...), or whether the vehicle has a bright or a dark color. As another example, even in cases where the license plate number of the vehicle 16 is not completely readable, the processing in step 66 may determine certain aspects of the license plate number, such as the aspect that the second character has a vertical beam shape and thus is likely the letter "I" or "J" or the number "1".

It is an important aspect of certain embodiments of the present invention that the processing used in step 66 is adapted for providing this kind of partial information, which may be a sufficient basis for the overall authorization process even if it would not be sufficient for other applications.

In some embodiments, the processing in step 66 may remove or obscure information for reasons of privacy or data protection. For example, even when the physically discernible information 50 shows a well-readable image of the license plate of the vehicle 16, the processing in step 66 may generate vehicle identification data 52 which only contains a few character of the license plate number, in order to protect the privacy of the customer. The processing in step 66 may even omit the license plate information entirely if sufficient other vehicle identification data 52 is available.

In the embodiments described above, which are also shown in Fig. 3, the merchant terminal 22 sends the physically discernible information 50 to the background system 30 with little or no preprocessing, and the (first) server 32, 32' of the background system 30 performs any substantial processing operations in step 66. However, the present invention is not limited to a particular entity for performing step 66. Embodiments are also contemplated in which step 66 is performed fully or partly by the merchant terminal 22 and/or by another remote or local server and/or by a combination of multiple entities. In other words, the present invention is intended to encompass any distribution of the processing operations of step 66 between the merchant terminal 22 and/or the (first) server 32, 32' of the background system 30 and/or one or more other processing devices. In embodiments in which step 66 is performed partly or completely by an entity other than the background system 30, the results of step 66 are also regarded as physically discernible information 50, according to the terminology used in the present document. The vehicle identification data 52 may then be identical to the physically discernible information 50, or the background system 30 may obtain the vehicle identification data 52 by a relatively simple operation of copying and/or formatting the received physically discernible information 50.

Operation 68 concerns the determination of a particular association 42V among the associations 42 defined by the data assets 40 that is expected, with a sufficient degree of likelihood, to correspond to the vehicle 16 of the authorizing party 18. In a first step 70, the associations 42 defined by the data assets 40 are matched to the available identification data 52. Finding matching associations 42 can be relatively straightforward in cases where the vehicle identification data 52 contains information which is expected to be identically contained in the identifying information 44. For example, if both the vehicle identification data 52 and the identifying information 44 contain the full license number or an initial portion of the license number, a simple equality check or prefix equality check may be sufficient to determine matching associations 42. The same is true in cases where both the vehicle identification data 52 and the identifying information 44 contain normalized information regarding the vehicle 16, such as information about the make, color, and so on selected from a predefined list.

More complex matching procedures are necessary in other cases. For example, certain embodiments may use an extended comparison to cope with possible variations in names and/or terms used to designate certain properties of the vehicle 16. This extended comparison might, for example, consider abbreviations (e.g., "VW" should match "Volkswagen") or synonyms (e.g., "truck" should match "lorry") or terms denoting similar concepts (e.g., "orange" should match "light red"). As another example, in some embodiments the matching procedure is adapted to the possibility that the vehicle information data 52 contains only partial information. For instance, if the vehicle information data 52 contains only information about the general kind of characters in the individual positions of the license number (such as "the first character is a vertical-beam like character", "the second character has a generally round shape", etc.), then a sophisticated matching process will be necessary. Thus, the terms "match" or "matching" used in the present document shall not be understood as being limited to an equality check, but are intended, in some embodiments, to comprise similarity comparisons and/or fuzzy comparisons and/or other more complex procedures.

The matching in step 70 may result in zero, one, or multiple hits, i.e., associations 42 defined by the data assets 40 in the one or more databases 36 which conform to the available vehicle information data 52. If there is only a single such association (branch "yes" of test 72), then it can normally be assumed that this is actually the particular association 42V which corresponds to the vehicle 16. The background system 30 then looks up the contact information 46 in this particular association 42V and uses the contact information 46 to send, in step 74, an authorization request 54 to the customer terminal 20. The authorization request 54 contains the necessary information for the authorizing party 18 to identify the requested transaction, such as a name of the initiating party 14, an indication how much money is to be authorized, an indication of the payment means, and so on.

In response to receiving the authorization request 54, the customer terminal 20 obtains a confirmation (or rejection) of the transaction from the authorizing party 18 in step 76. For example, in embodiments in which the customer terminal 20 is implemented by means of an on-board device of the vehicle 16 or a smartphone of the authorizing party 18, the confirmation request 54 may cause the customer terminal 20 to display a suitable pop-up window which asks the authorizing party 18 to approve of the transaction. For example, the authorizing party 18 may simply be asked to touch an on-screen button marked "Accept" or similar. Alternatively or additionally, some kind of authentification is performed, in that the authorizing party 18 needs to input a PIN or a password or pass another authentification test provided by the customer terminal 20. In particularly simple embodiments in which the customer terminal 20 is any kind of mobile device (not necessarily a smartphone), the confirmation request 54 may be a commonly known text message to which the authorizing party 18 sends a reply (e.g., authorizing the transaction by typing "OK").

After the agreement of the authorizing party 18 with the transaction has been confirmed in step 76, the customer terminal 20 sends, in step 78, a suitable authorization response 56 to the (first) server 32, 32' of the background system 30. The transaction is then completed by the (first) server 32, 32' and/or the merchant terminal 22 and/or one or more further servers.

Typical payment methods would be a wallet associated with the vehicle 16 and/or the authorizing party 18, a credit card, a debit order, or any other payment method known as such. The presently disclosed invention is not directed to particular payment methods.

In embodiments as shown in Fig. 2, in which the background system 30 comprises multiple servers 32', 34, the matching procedure in step 70 may involve coordinated operations of more than one server. For example, the first server 32' may determine only the make of the vehicle 16 by a limited image analysis of the physically discernible information 50 and/or from the vehicle information data 52. Based on the determined make (e.g., the vehicle 16 is a VW, BMW, Ford, ...), the first server 32' determines a particular server 34V selected from a number of second servers 34 maintained by the respective vehicle manufacturers and forwards the vehicle information data 52, or part thereof, to the selected particular server 34V. This may be because only the vehicle manufacturers may have more detailed identifying information 44 and/or the contact information 46 of their customers or their customer's vehicles 16 available.

For example, only the vehicle manufacturer may have dynamic information such as the current location of the manufacturer's vehicles available. If the vehicle manufacturer decides that this information may be shared with the operator of the first server 32', then the first server 32' may determine the make of the vehicle 16 and the corresponding particular server 34V of the vehicle manufacturer. The first server 32' may further forward suitable data, such as part or all of the vehicle identification data 52, to the particular server 34V. The particular server 34V operated by the vehicle manufacturer of the vehicle 16 then returns information about the current location of the vehicle 16 (or the current locations of all vehicles which match non-unique vehicle identification data 52) to the first sever 32', to enable the first server 32' to compare the current location of the vehicle 16 with the location of the merchant site 10. The location information sent by the particular server 34V may be exact or may have purposely introduced errors.

In other embodiments, a vehicle manufacturer may decide (e.g., for strategic or legal reasons) that dynamic information such as the current location of the manufacturer's vehicles cannot be shared with third parties, or may charge a high fee. In these cases, the first server 32' may send location information about the merchant site 10 to the particular server 34V maintained by the determined vehicle manufacturer, and the particular server 34V only indicates whether or not the current location of the vehicle 16 is sufficiently close (e.g., within a range specified in the request from the first server 32') to the location of the merchant site 10.

Using a background system 30 which comprises multiple servers 32', 34 separated between different domains and/or entities may also be beneficial to achieve data minimization and/or data protection. In particular, distributing portions of the associations 42 between different servers 32', 34 may maintain a certain amount of secrecy even if one of these different servers 32', 34 is compromised. For example, as indicated in the previous paragraph, "constant" or "static" data portions regarding a particular vehicle 16 (such as model and color) may be maintained by the first server 32', and "variable" or "dynamic" data portions (such as the current location) may be maintained by other servers, such as the second servers 34 operated by the individual vehicle manufacturers.

In embodiments in which the customer terminal 20 is implemented by means of a dashboard system or entertainment system or navigation system of the vehicle 16, it may also be necessary to use a server maintained by the vehicle manufacturer (such as a respective one of the second servers 34) as an intermediary to access the customer terminal 20. In other words, in some of these embodiments the first server 32' sends the authorization request 54 not directly to the customer terminal 20, but to the particular server 34V specific to the make of the vehicle 16 which is adapted to interact with the customer terminal 20. The authorization response 56 is then also transmitted via the manufacturer-specific server 34V as an intermediary, or the manufacturer-specific server 34V may directly interact with a payment service provider.

The description so far assumed that the matching process in step 70 uniquely identifies a particular association 42V defined by the data assets 40 with sufficient certainty. However, especially in cases where the vehicle identification data 52 does not contain much information, multiple associations 42 may match the available vehicle information data 52. If this situation is determined in test 72 (branch "no"), then an additional step 80 of sub-selecting from the matching associations 42 determined in step 70 is performed.

Selecting one of multiple matching associations 42 in step 80 generally takes further information into account. In some embodiments, this information is location information about a typical or expected or actual location of the vehicle 16, relative to the known location of the merchant site 10. For example, the location information may be obtained in any of the ways indicated above, such as from a particular server 34V associated with a manufacturer of the vehicle 16. As the manufacturer may charge a fee for sharing the location information, in some embodiments the location information is only obtained in step 80 as a fallback measure, i.e., only if the location information is needed for sub-selecting from the matching associations 42 which were determined in step 70 based on other criteria.

In some embodiments, step 70 and/or step 80 may use information regarding a typical or expected location of the vehicle 16. For example, if the merchant site 10 is located in Munich and there are two matching associations 42 for vehicles registered in Hamburg and Munich, respectively, then a sufficient likelihood may be assumed in step 80 that the association 42 for the vehicle registered in Munich is the correct one.

Other ways for determining possible locations of the vehicle 16 can also be used, alternatively or additionally. For example, in some embodiments the system of the present invention is integrated in, or communicates with, a system which tracks refueling of vehicles. For each of the matching associations 42 determined in step 70, the corresponding vehicle and the filling station where this vehicle was most recently refueled may be determined. Step 80 may then select either a single vehicle 16 which was refueled at a filling station closest to the location of the merchant site 10, or may sub-select those vehicles which were refueled at filling stations sufficiently close to the merchant site 10, possibly taking the time since the most recent refueling into account (i.e., a recently refueled vehicle is less likely to have moved far from the location of the filling station than a vehicle for which the latest recorded refueling was relatively long ago). Similarly, historical refueling data may be used in step 80 to rule out vehicles which were recently refueled at a filling station far away from the merchant site 10.

Yet another possibility in some embodiments is to obtain current location data from a mobile device of the authorizing party 18, such as a smartphone. Typical mobile devices are equipped with accurate GPS receivers. Even if no GPS data is available (because the user of the mobile devices has turned off the GPS receiver to save power, or has disabled transmission of GPS data because they do not wish to be tracked), information about the cell of the cellular communication network the smartphone is currently located in (Cell ID information) is in many circumstances sufficient to determine a most likely matching association 42 with a required degree of certainty.

As described above, accurate location data is usually available to the manufacturer of the vehicle 16 by means of the "connected car" functionality which has now become standard in the industry. In some embodiments, this location data may also be used, alone or in combination with other information, in step 80. Obtaining the current and accurate location data from the manufacturer of the vehicle 16 may be costly or may entail further problems, so it may be preferable to avoid using this data whenever possible. However, in the case of a high-value transaction where a high degree of certainty is required, or on the case that sub-selecting based on other information in step 80 does not produce satisfactory results, some embodiments may resort to obtaining the current location of the vehicle 16 from a server operated or authorized by the vehicle's manufacturer, even if this incurs comparatively high costs.

As an alternative or in addition to using location data for the sub-selection in step 80, some embodiments use further wirelessly transmitted information about the vehicle 16 and/or the authorizing party 18, such as a name assigned to a wireless communication entity. For example, this information may be a Bluetooth name of a device built into the vehicle 16 or located in the vehicle 16 or carried by the authorizing party 18. A Bluetooth receiver associated with the merchant terminal 22 may detect the Bluetooth name and may forward it to the background system 32 together with the physically discernible information 50. In the case where the Bluetooth name is a Bluetooth name of the vehicle 16, it may properly be regarded as part of the physically discernible information 50 about the vehicle 16. Different Bluetooth names generally have different amounts of information content, ranging from generic names (e.g., "Tesla Car") to individual names which may by themselves be sufficient to uniquely identify a particular vehicle 16. In some cases, it may be necessary to contact a further server associated with the manufacturer of the vehicle, such as one of the second servers 34 described above.

A general search for active Bluetooth devices in the vicinity of the merchant site 10 or the merchant terminal 22 will generally return many Bluetooth names. In some embodiments, Bluetooth devices are scanned at frequent intervals, and only Bluetooth names are considered which appeared in the list of active Bluetooth devices since the time a particular vehicle 16 arrived at the merchant site 10.

Yet a further possibility for obtaining additional information in step 80 is just to ask the initiating party 14 to enter such information at the merchant terminal 22. This entered information can be used as the sole further information in step 80, or it can be combined with other kinds of further information, such as location information and/or Bluetooth names. In simple embodiments, the background system 30 may just send a request for further information, such as further details about the physical appearance of the vehicle 16, to the merchant terminal 22. In more refined embodiments, the background system 30 may compare the matching associations 42 obtained in step 70, and determine one or a few questions which, if answered, uniquely identify a single one of the matching associations 42. For example, if step 80 has already narrowed down the results of step 70 to two matching associations 42 for red VW Golfs in the vicinity of the merchant site 10, then the background system 30 may determine that one of these associations 42 relates to a convertible and the other one relates to a sedan. The background system 30 may then instruct the merchant terminal 22 to specifically ask the initiating party 14 to indicate the body shape of the vehicle 16, possibly using a selection menu that is shown on the merchant terminal 22 and includes the menu items indicated to the merchant terminal 22 by the background system 30.

There is generally little harm done if the described method fails, i.e., if the vehicle 16 and the authorizing party 18 cannot be determined with a sufficient degree of likelihood. In this case, the transaction will simply need to be authorized in one of the ways known in the prior art, such as by using a credit card of the authorizing party 18 and a standard card terminal of the initiating party 14. This may take more time, but the savings of the present invention are almost fully realized even if, say, 5% or 10% of the transactions need to be handled according to another method. Another possibility if steps 70 and 80 fail to determine a particular vehicle 16 and/or a particular authorizing party 18 with a sufficient degree of certainty is that the background system 30 directs the merchant terminal 22 to request the initiating party 14 to enter further information about the vehicle 16 or the authorizing party 18, or to review the determined vehicle identification data 52 and correct any errors such as an incorrectly read vehicle license number.

As mentioned above, the described method generally does not need to make a correct determination regarding the vehicle 16, the particular association 42V, and the authorizing party 18 with 100% certainty. The required degree of certainty depends on the particulars of the case, such as on the monetary value of the transaction. Generally speaking, the presently described authentication method may be practicable even if an incorrect authorizing party 18 is identified for a small percentage of transactions. In most cases, if a pop-up window to authorize a transaction is incorrectly shown at a customer terminal not associated with that transaction, the user of that customer terminal will just decline the transaction. Even in the few cases in which an incorrectly contacted user wrongly authorizes a transaction, the monetary damage may be small in comparison to the savings afforded in many other cases by using the presently described techniques. Nevertheless, as indicated above, it may be advisable to let an authorization process fail in the event of any doubt, instead of incorrectly showing a pop-up authorization window to a user who may then be annoyed.

The particulars contained in the above description of sample embodiments should not be construed as limitations of the scope of the invention, but rather as exemplifications of some embodiments thereof. Many variations are possible and are immediately apparent to persons skilled in the arts. In particular, this concerns variations that comprise a combination of features disclosed in the present specification. Accordingly, the scope of the invention should be determined not by the embodiments illustrated, but by the appended claims and their legal equivalents.

### LIST OF REFERENCE SIGNS

- 10: merchant site
- 12: business establishment
- 14: initiating party
- 16: vehicle
- 18: authorizing party
- 20: customer terminal
- 22: merchant terminal
- 24: camera
- 26: data entry device
- 28: network
- 30: background system
- 32, 32': (first) server
- 34: second server (34A, 34B, ...)
- 34V: particular server
- 36: database
- 38: network
- 40: data asset
- 42: association (42A, 42B, 42C, ...)
- 42V: particular association
- 44: identifying information
- 46: contact information
- 48: banking information
- 50: physically discernible information
- 52: vehicle identification data
- 54: authorization request
- 56: authorization response

- 60 - 80: operations and steps of the method shown in Fig. 3

## Claims

1. A computer-implemented method for authorizing a transaction, the transaction involving at least an initiating party (14) and at least one authorizing party (18) associated with a vehicle (16), the method comprising operations performed by a background system (30):
- receiving, at the background system (30), physically discernible information (50) about the vehicle (16);
- obtaining vehicle identification data (52) based on the received physically discernible information (50);
- accessing one or more data assets (40) in one or more databases (36), wherein the one or more data assets (40) define a plurality of associations (42), wherein each association (42) of the plurality of associations (42) associates identifying information (44) about a respective vehicle (16) with contact information (46);
- determining a particular association (42V) of the plurality of associations (42), wherein the obtained vehicle identification data (52) matches the identifying information (44) of the particular association (42V); and
- sending, or causing to be sent, a request (54) to authorize a transaction to a recipient identified by the contact information (46) of the particular association (42V).

2. The method of claim 1, wherein the physically discernible information (50) about the vehicle (16) comprises information entered by a human operator concerning a make and/or a model and/or a color of the vehicle (16).

3. The method of claim 1 or claim 2, wherein the physically discernible information (50) about the vehicle (16) comprises at least one of:
- image information showing all or part of the vehicle (16),
- image information showing part of a license plate of the vehicle (16), and/or
- image information showing all or part of a license plate of the vehicle (16) with an only partially readable license number.

4. The method of claim 1 or claim 2, wherein the physically discernible information (50) comprises image information showing all or part of the vehicle (16), and wherein image processing is applied to the image information to determine information about a make and/or a model and/or a color of the vehicle (16).

5. The method of claim 1 or claim 2, wherein the physically discernible information (50) comprises image information showing all or part of a license plate of the vehicle (16), and wherein image processing is applied to the image information to determine information about a license number of the vehicle (16), wherein the image processing falls short of determining the complete license number.

6. The method of claim 5, wherein the information about the license number is usable to exclude certain characters at certain positions of the license number.

7. The method of any of claims 1-6, wherein the physically discernible information (50) about the vehicle (16) comprises information wirelessly transmitted by the vehicle (16) or by a device inside the vehicle (16).

8. The method of claim 7, wherein the wirelessly transmitted information is a wireless communication name such as a Bluetooth name.

9. The method of any of claims 1-8, wherein the physically discernible information (50) matches multiple ones of a plurality of vehicles registered in the one or more databases (36).

10. The method of claim 9, further comprising:
- determining at least one distinguishing property suitable to distinguish among the multiple matching vehicles, and
- obtaining user input related to the at least one distinguishing property.

11. The method of any of claims 1-10, further comprising:
- determining a particular location associated with the vehicle (16), and
- comparing the particular location with a location where the physically discernible information (50) was obtained.

12. The method of claim 11, wherein the particular location is one of:
- a current location of the vehicle (16),
- a location where the vehicle (16) or a holder of the vehicle (16) is registered,
- a location of a filling station where the vehicle (16) was refueled,
- a location of an EV charging station where the vehicle (16) was recharged, or
- a location of a car wash where the vehicle (16) was captured by a camera.

13. The method of any of claims 1-10, wherein determining the particular association (42V) comprises:
- determining, by a first server (32') and based on the identifying information (44), a second server (34V) specific to a make of the vehicle (16),
- determining, by the second server (34V), a current location of the vehicle (16), and
- determining, by the first server (32') or the second server (34V), that the current location of the vehicle (16) is within a specified distance from a location where the physically discernible information (50) was obtained.

14. A machine-readable medium or multiple machine-readable media having program instructions stored thereon, wherein the program instructions are adapted to cause one or more one or more computing devices, when executing the program instructions, to perform operations including the operations recited in any of claims 1-13.

15. A system comprising one or more computing devices, wherein the system is adapted to perform operations including the operations recited in any of claims 1-13.
